# EUROPEAN PATENT SPECIFICATION

(11) **EP 3 958 664 B1**
(45) Date of publication and mention of the grant of the patent: **15.01.2025**
(21) Application number: 20717744.5
(22) Date of filing: 21.04.2020
(51) Int. Cl.: A01D 46/26

(54) **DEVICE FOR HARVESTING BILBERRIES**
VORRICHTUNG ZUM ERNTEN VON BLAUBEEREN
DISPOSITIF DE RÉCOLTE DE MYRTILLES

(30) Priority: 24.04.2019 IT 201900006324
(43) Date of publication of application: 02.03.2022
(73) Proprietor: CAMPAGNOLA S.r.l., 40069 Zola Predosa (BO) (IT)
(72) Inventor: PELLICANO', Pasquale Patrizio, 40026 Imola (Bologna) (IT); PREDIERI, Loredana, 40053 Valsamoggia (Bologna) (IT)
(74) Representative: Conti, Marco
(86) International application number: PCT/IB2020/053755
(87) International publication number: WO 2020/217166

(56) References cited:
- EP-A1- 2 624 438
- GB-A- 1 328 599
- US-A1- 2013 199 812
- US-A1- 2014 049 204

## Description

### Technical field

This invention relates to a device for harvesting bilberries.

Bilberries are particularly delicate fruits and harvesting them must be carried out in such a way as to avoid impact and compression bruising, which leads to spoilage. Moreover, a bilberry plant has ripe and unripe fruits on it at the same time; if all the fruits are harvested, the ripe must be separated from the unripe after harvesting so the unripe ones do not reach market shelves.

### Background art

Typically, small fruits are harvested using shaking tools including a vibrating hook configured to grasp and shake the branches of the plant so as to cause the fruits to drop. Tools for harvesting small fruits are described, for example, in the following patent documents: CN108353638A, CN108093865A, CN106358598A, CN103460904A, CN206181836U, CN 205232838U, US2013/199812A1, EP2624438A1, US2014/049204, US2013/199812A1, EP2624438A1, US2014/049204A1.

The hooks of prior art shaking tools have a variable oscillating frequency selectable by an operator through a frequency selector. To harvest the fruits, the operator grasps a branch of the plant with the hook, selects the vibration frequency suitable for that branch (that is, enough to make the ripe fruits drop off) and starts hook vibration; once the fruits have dropped, the hook is switched off and disengaged from the branch and the operation is repeated on another branch (after selecting the vibration frequency suitable for that other branch). The frequency must be suitable to make the ripe fruits drop but not the unripe ones (and is therefore not easy to identify and select).

That means each time the operator grasps a different branch, they must identify the frequency suitable for the branch, start the motor which drives the hook and, after finishing with that branch, must switch the motor off. This operation is complicated and takes time. In addition, the time needed for the operation is further prolonged by the mechanical inertia which the shaking hook is subject to, meaning that when the motor is switched off, the hook continues to vibrate for several seconds. Moreover, the prior art tools are heavy and cumbersome.

### Aim of the invention

The aim of this disclosure is to provide a device for harvesting bilberries and a method for harvesting bilberries to overcome at least one of the above mentioned disadvantages of the prior art.

This aim is fully achieved by the device for harvesting bilberries and by the method of this disclosure as characterized in the appended claims.

This disclosure relates to a device for harvesting bilberries. More generally speaking, this disclosure relates to a device for harvesting small fruits. For example, the device may be suitable for harvesting berries, and/or olives. The device comprises a frame. The frame includes a handgrip portion (grippable by a harvest operator). Thus, the device is portable.

The device comprises a shaking unit. The shaking unit includes a hook-shaped portion (or hook) for grasping a branch of a bilberry plant. The shaking unit has a first end which is connected to the frame and a second end which includes the hook-shaped portion. The shaking unit is movable (or capable of oscillation) relative to the frame with reciprocating motion along an axis of vibration to shake the branch.

The device comprises a motor. The motor is associated with (or contained in) the frame.

The device comprises a transmission unit. The transmission unit is interconnected between the motor and the shaking unit. The motor is associated with the transmission unit to vibrate the shaking unit along the axis of vibration. More specifically, the vibration frequency is variable.

The device comprises a start and stop system. The start and stop system is drivable by an operator to send a start command and a stop command to the motor. More specifically, the start and stop system comprises a trigger. The trigger is located in proximity to the handgrip portion of the frame. That way, by gripping the handgrip portion, the operator can operate the trigger. Each time the operator passes from one branch to another, they stop and restart the motor through the start and stop system. The device comprises a frequency adjustment system. The frequency adjustment system is drivable by the operator to select the vibration frequency at least between a first frequency and a second frequency. In an embodiment, the frequency adjustment system is drivable by the operator to select the vibration frequency from a plurality of frequencies. Thus, the vibration frequency is variable through the frequency adjustment system.

The frequency adjustment system is configured to keep the vibration frequency permanently set at the setting selected by the operator unless the frequency adjustment system is acted upon by the operator. In effect, it has been observed experimentally that the optimum oscillating frequency (which can make the ripe bilberries drop but not the unripe bilberries) is often the same for the branches of the same plant or of adjacent plants. Thus, once the operator has selected the optimum oscillating frequency for a certain plant or group of plants, they need not repeat the frequency selection operation each time they pass from one branch to another.

According to the invention, the frequency adjustment system is configured to keep the vibration frequency permanently set at the setting selected by the operator, independently on the operator acting on the start and stop system, for switching the motor on and/or off. Hence, the vibration frequency may be selected while the motor is off; then, when the motor is switched on, the shaking unit will start to vibrate at the selected vibration frequency. Moreover, the selected vibration frequency remains set even when the operator switches the motor off and, then, switches again the motor on; so, upon the motor being again switched on, the shaking unit starts vibrating at the pre-selected vibration frequency.

Preferably, the frequency adjustment system is drivable by the operator independently of the start and stop system. Thus, the operator selects the frequency and that frequency remains set even when the operator stops and restarts the device. In an embodiment, the frequency adjustment system is distant from the start and stop system.

In an embodiment, the frequency adjustment system is configured to store the vibration frequency even after giving the stop command and/or the start command.

In an embodiment, the adjustment system includes an adjustment device which is settable at least at a first operating position and at a second operating position. The adjustment system is configured to keep the first frequency selected permanently, responsive to the adjustment device being set at the first operating position, and the second frequency selected permanently, responsive to the adjustment device being set at the second operating position.

In an embodiment, the device comprises a braking system, connected to the start and stop system and configured to dampen the vibration of the shaking unit in response to the motor being switched off through the start and stop system. That way, the operator does not need to wait for the effects of the mechanical inertia on the unit to diminish naturally before moving on to another branch.

In an embodiment, the motor is an electric motor. More specifically, the motor is a brushless motor. In this embodiment, the frequency adjustment system includes an electronic adjuster (or inverter) configured to regulate the electrical supply current of the electric motor. More specifically, the electronic adjuster is configured to supply the electric motor with a variable frequency electric current to vary the vibration frequency of the shaking unit, at least between the first frequency and the second frequency (or between a plurality of frequency values).

In an embodiment, the device comprises a battery. The battery may be associated with the frame or, more preferably, located in a backpack worn by the operator (the battery being connected to the frame by an electrical cable). The battery is configured to power the electric motor. In another embodiment, the device is configured to be connected to the electrical grid.

In an embodiment, the electronic adjuster is configured to reduce the frequency of the electric current to brake the motor responsive to the stop command being given. Thus, in an embodiment, the electronic regulator also defines the braking system. This solution also allows reducing electrical energy consumption. In another embodiment, the braking system includes a mechanical brake, connected to the shaking unit and controlled as a function of the stop command.

In an embodiment, the electronic adjuster is configured to vary the frequency of the electric current steplessly between a plurality of frequency values. In another embodiment, the electronic adjuster is configured to vary the frequency of the electric current in steps between a plurality of frequency values.

Preferably, the adjustment system is configured to select the vibration frequency in a frequency interval between 1200 and 2200 oscillations (or cycles) per minute. In effect, it has been observed experimentally that in most bilberry plant branches, these are the optimum frequency values to shake ripe bilberries (but not unripe ones) off the branches.

The shaking unit has a stroke of less than 20 mm along the vibration axis. The length of the stroke is fixed. In an embodiment, the stroke is also greater than 12 mm. Preferably, the stroke is less than 18 mm. Still more preferably, the stroke is between 15 and 17 mm (for example, 16 mm). In effect, it has been observed experimentally that these are the optimum stroke values to shake ripe bilberries (but not unripe ones) off the branches.

In an embodiment, the transmission unit includes a link and crank mechanism.

In an embodiment, the transmission unit includes a slider crank mechanism (or slotted link mechanism). In particular, for slider crank mechanism (or slotted link mechanism) it is here intended a mechanism which transforms the rotative motion of a wheel (or gear) in a linear, alternative motion. The slider crank mechanism allows making the device lighter in weight.

In an embodiment, the shaking unit is adjustable to vary the size of the hook shaped portion. More specifically, the hook-shaped portion is curved (or angled) between a first end and a second end and is adjustable to vary the distance between the first end and the second end. That way, the device is adaptable to different types of bilberry plants (or other berry plants).

This disclosure also provides a method for harvesting small fruits. In particular, the small fruits can be: bilberries, berries and/or olives.

The method comprises a step of positioning a hook-shaped portion of a shaking unit around a branch of a small fruits plant (for example, a bilberry plant, or a berry plant, or an olive plant).

The method comprises a step of an operator selecting a vibration frequency of the shaking unit at least between a first frequency and a second frequency (or from a plurality of frequency values) using a frequency adjustment system.

The method comprises a step of starting a motor to vibrate the shaking unit along the axis of vibration at a vibration frequency. The step of starting the motor comprises a step of an operator giving a command to start the motor.

The method comprises a step of stopping the motor. The step of stopping the motor comprises a step of the operator giving a command to stop the motor.

The vibration frequency selected by the operator is kept permanently at the selected setting through a frequency adjustment system unless the frequency adjustment system is acted upon by the operator. More specifically, the vibration frequency selected by the operator remains set during the steps of starting and stopping the motor.

In an embodiment, the motor is an electric motor and the adjustment system sets the vibration frequency selected by the operator by adjusting a frequency of a motor supply current.

Preferably, the step, of selecting the vibration frequency is carried out by the operator independently of the step of giving the command to start the motor and of the step of giving the command to stop the motor.

In an embodiment, following a step of giving a command to stop the motor, the method comprises a step of controlled braking of the shaking unit to dampen the vibration of the shaking unit. In an embodiment in which the motor is an electric motor, the step of controlled braking comprises a step of adjusting a frequency of a supply current of the electric motor. Preferably, in the step of selecting, the vibration frequency of the shaking unit is selected in a frequency interval between 1200 and 2200 oscillations per minute.

### Brief description of the drawings

These and other features will become more apparent from the following description of a preferred embodiment, illustrated by way of non-limiting example in the accompanying drawings, in which:

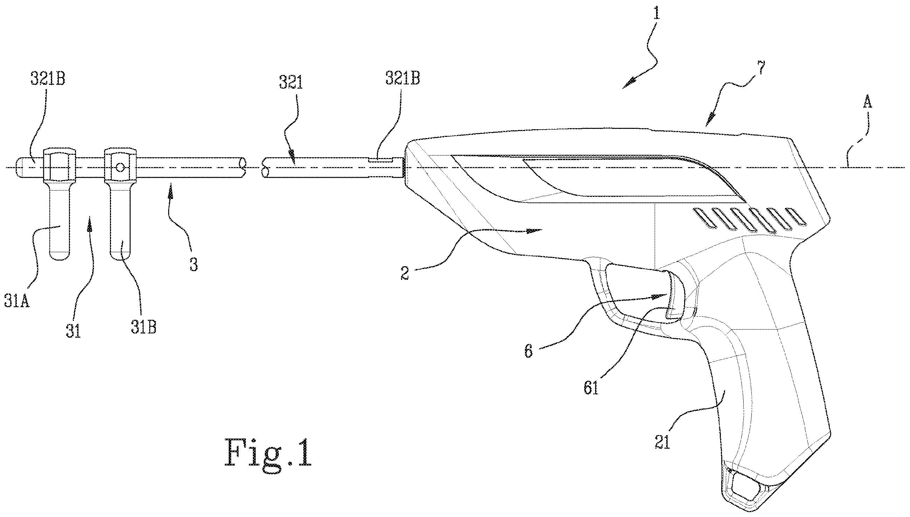

- Figure 1 shows a side view of a device according to this disclosure;

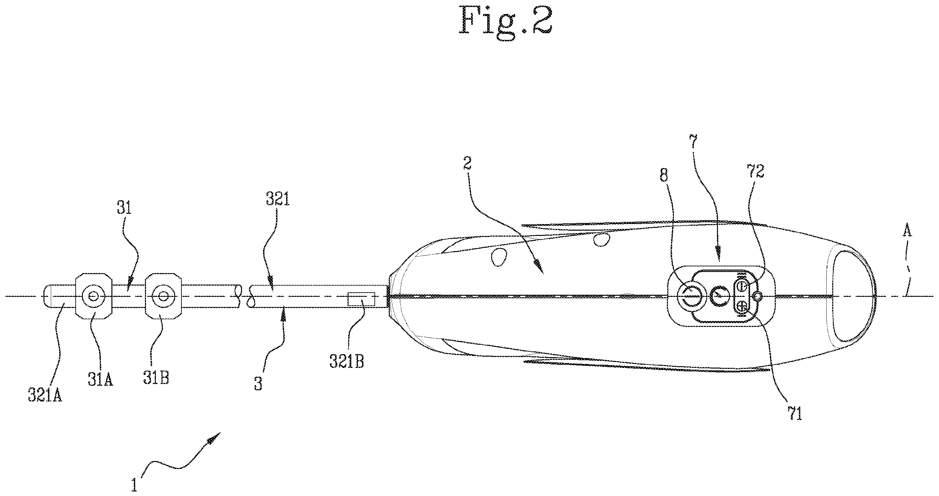

- Figure 2 shows a top view of the device of Figure 1;

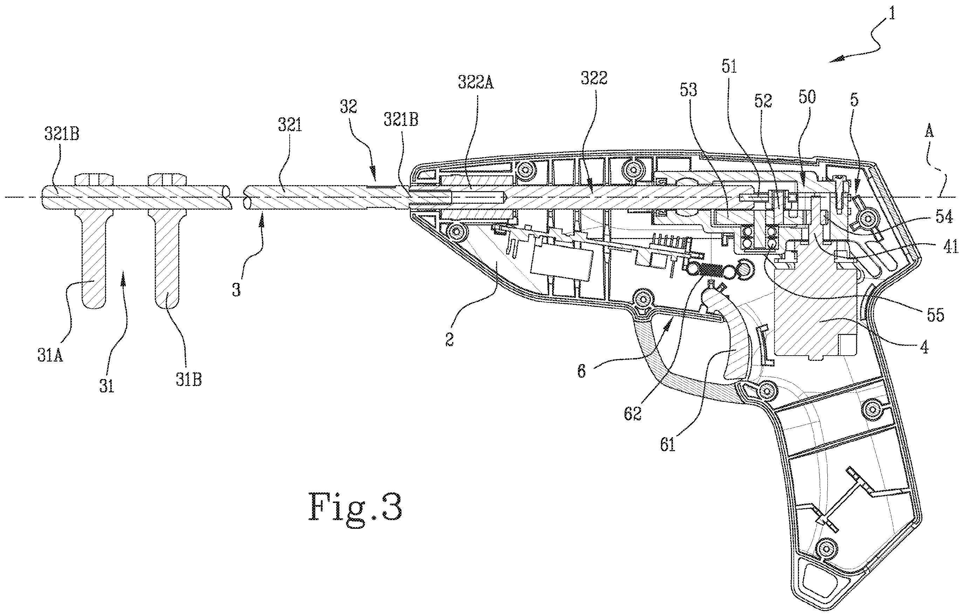

- Figure 3 shows a lateral cross section of the device of Figure 1;

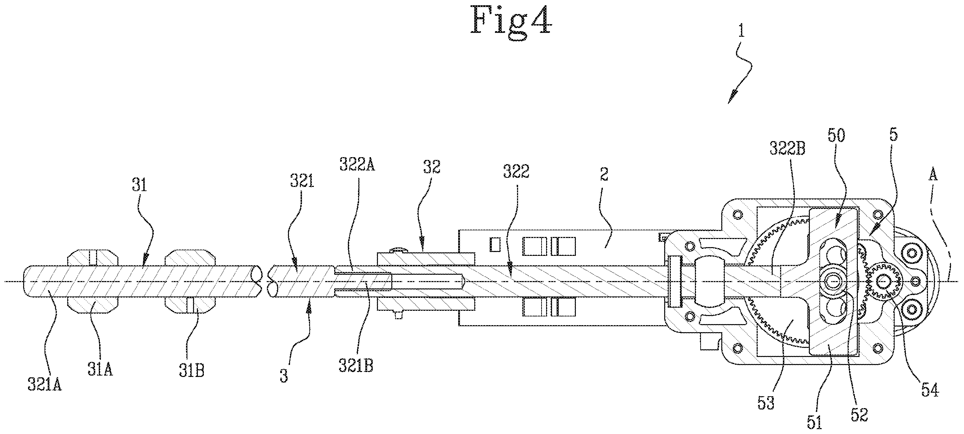

- Figure 4 shows a horizontal cross section of the device of Figure 1;

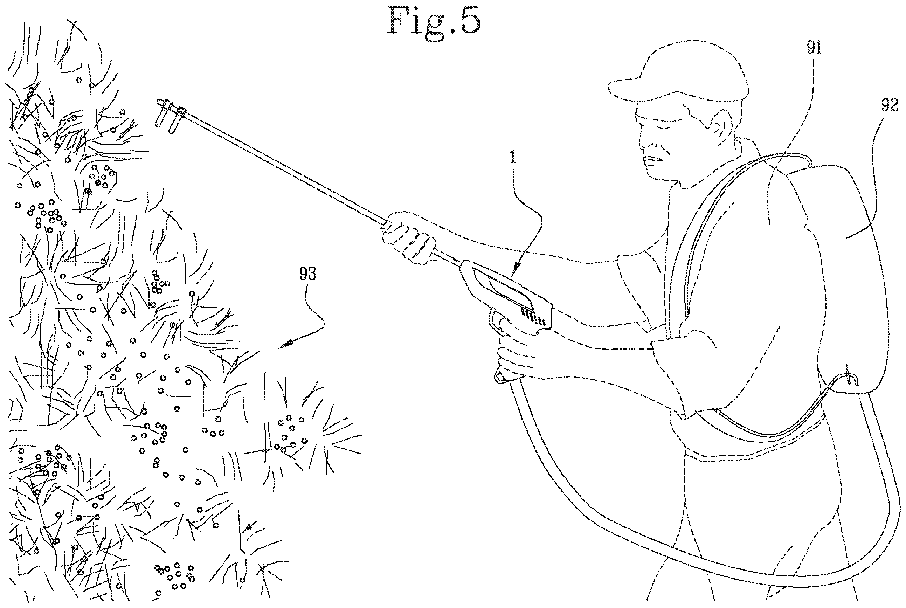

- Figure 5 shows the device during its operation.

### Detailed description of preferred embodiments of the invention

With reference to the accompanying drawings, the numeral 1 denotes a device for harvesting bilberries.

The device 1 comprises a frame 2. The frame 2 is made, for example, of plastic material. The frame 2 comprises a handgrip portion 21. The handgrip portion 21 can be used by an operator 91 to grip the frame 2. More specifically, the operator 91 grips the handgrip portion 21 with one hand.

The device 1 comprises a shaking unit 3. The shaking unit 3 is movable relative to the frame 2 with vibratory reciprocating motion along an axis of vibration A. The shaking unit 3 includes a hook-shaped portion 31. The shaking unit 3 includes a rod 32. The rod 32 extends along the axis of vibration A. The hook-shaped portion 31 is located at a free end of the rod 32.

The hook-shaped portion 31 is configured for grasping a branch of a bilberry (or other small fruits) plant 93.

More specifically, the rod 32 includes a first portion 321 and a second portion 322 which are detachably coupled to each other. The first portion 321 in turn extends between a first end 321A and a second end 321B. The hook-shaped portion 31 is connected to the first end 321A of the first portion 321.

The second portion 322 extends between a first end 322A and a second end 322B. The second end 321B of the first portion 321A is structured to be detachably coupled to the first end 322A of the second portion 322.

The detachable coupling of the first portion 321 to the second portion 322 allows dismantling the device 1 for transportation or storage.

The hook-shaped portion 31 comprises a first element 31A and a second element 31B connected to the rod 32 (specifically to the first portion 321). At least one (or both) of the first element 31A and the second element 31B is slidable along the rod 32 to vary a respective mutual position. That way, the distance between the first element 31A and the second element 31B is adjustable to vary the size of the hook shaped portion 31.

The device 1 comprises an electric motor 4. The electric motor 4 is located inside the frame 2. In effect, the frame 2 defines a closed enclosure.

The device 1 comprises a battery (or battery pack) located in a backpack 92 wearable by the operator 91. The device 1 comprises an electrical connecting cable to connect the backpack 92 to the frame 2 (hence to the electric motor 4).

The electric motor 4 comprises a rotary portion. The motor 4 comprises a pinion 41, connected to the rotary portion. The pinion 41 is thus driven in rotation by the electric motor 4.

The device comprises a transmission unit 5. The transmission unit 5 is configured to transmit motion from the electric motor 4 to the shaking unit 3. The transmission unit 5 comprises a slider crank mechanism (or slotted link mechanism) 50. The transmission unit 5 (that is, the slider crank mechanism 50) comprises a slider element (or slotted link element) 51, connected (or fixed) to the end of the rod 32 (specifically to the second end 322B of the second portion 322 of the rod 32). The slider element 51 is slidable in a guide, with reciprocating motion along the axis of vibration A. The slider element 51 defines a slot inside it. The transmission unit 5 comprises a pin 52 which is slidable inside the slot in the slider element 51. The transmission unit 5 comprises a first toothed wheel 53, to which the pin 52 is fixed. The rotation of the first toothed wheel 53 causes the pin 52 to move within the slot and, at the same time, causes a movement of the slider element 51, and thus of the rod 32, along the axis of vibration A. The transmission unit 5 comprises a second toothed wheel 54, which meshes with the first toothed wheel 53. The pinion 41 is fixed to the second toothed wheel 54 (specifically mounted internally thereof). Thus, the rotation of the pinion 41 is transmitted, through the second toothed wheel 54, to the first toothed wheel 53 and to the pin 52, which causes the slider element 51 to move in the guide along the axis of vibration A.

The transmission unit 5 also comprises rolling bearings 55 connected to the first toothed wheel 53 (to reduce friction during the rotation thereof).

The device 1 comprises a start and stop system 6. The start and stop system 6 comprises a trigger 61 actuatable by the operator 91. More specifically, the trigger 61 is in the proximity of the handgrip portion 21 so that the operator 91 can pull the trigger 61 while holding the handgrip portion 21. The start and stop system 6 comprises a spring 62, operable by pulling the trigger 61. The start and stop system 6 is connected to the motor 4 to send it a start command and a stop command. More specifically, pulling the trigger 61 gives the start command and releasing the trigger 61 gives the stop command. Thus, the trigger 61 is movable between a pulled position, where it gives the start command, and a released position, where it gives the stop command.

The device 1 comprises a frequency adjustment system 7. The frequency adjustment system 7 is located on the frame 2 at a position distant from the handgrip portion 21. The frequency adjustment system 7 comprises a frequency increase control 71 and a frequency decrease control 72. More specifically, the frequency increase control 71 and the frequency decrease control 72 are pushbuttons. The operator 91 increases the oscillating frequency by acting on (specifically by pressing) the frequency increase control 71. The operator 91 decreases the oscillating frequency by acting on (specifically by pressing) the frequency decrease control 72.

The device 1 comprises a shutdown control 8. The shutdown control 8 is configured to power-off the device and deactivates both the start and stop system 6 and the frequency selection system 7. The shutdown control 8 is also configured to power-on the device 1 and reactivates both the start and stop system 6 and the frequency selection system 7. In an embodiment, the shutdown control 8 is located in proximity to the frequency selection device 7. For example, the device 1 may comprise a keyboard including the shutdown control 8, the frequency increase control 71 and the frequency decrease control 72. The keyboard is located in an area of the device 1 distant from the trigger 61.

This disclosure also relates to a method for harvesting small fruits (for example, bilberries, or berries, or olives). The method comprises a step of positioning a hook-shaped portion 31 of a shaking unit 3 around a branch of a small fruits plant 93 (for example, a bilberry plant, or a berry plant, or an olive plant).

The method comprises a step of an operator 91 selecting a vibration frequency of the shaking unit 3 at least between a first frequency and a second frequency through a frequency adjustment system 7. More specifically, the operator 91 selects the oscillating frequency by acting on the frequency increase control 71 and the frequency decrease control 72.

The method comprises a step of starting a motor 4 to vibrate the shaking unit 3 along an axis of vibration A at a vibration frequency. The step of starting the motor 4 comprises a step of an operator 91 giving a command to start the motor. More specifically, the operator 91 gives the start command by acting on a start and stop system 6 (that is, by pulling a trigger 61).

The method comprises a step of stopping the motor 4. The step of stopping the motor 4 comprises a step of the operator 91 giving a command to stop the motor 4. More specifically, the operator 91 gives the stop command by acting on the start and stop system 6 (that is, by releasing the trigger 61). Thus, the start and stop system 6 (that is, the trigger 61) is used to give both the command to start the motor 4 and the command to stop the motor 4.

The vibration frequency selected by the operator 91 is kept permanently at the selected setting through a frequency adjustment system 7 unless the frequency adjustment system 7 is acted upon by the operator 91. More specifically, the step, of selecting the vibration frequency is carried out by the operator 91 independently of the step of giving the command to start and stop the motor 4. The vibration frequency selected by the operator 91 remains set during the steps of starting and stopping the motor.

Thus, following the step of selecting the frequency, the method comprises further steps of positioning, starting and stopping, repeated cyclically; during these steps, the frequency remains permanently set at the value initially selected by the operator.

The device 1 may also be provided with an indicator configured to show the operator 91 whether the tool (that is, the motor 4) is on or off. The indicator may be an illuminated (LED) indicator. The indicator may be located in proximity to the frequency increase control 71 and frequency decrease control 72 (on the keyboard).

The device 1 may also include an interface configured to show the operator 91 the selected frequency value (or a corresponding value on a scale). The interface may be located in proximity to the frequency increase control 71 and frequency decrease control 72 (on the keyboard).

## Claims

1. A device (1) for the harvesting of bilberries, comprising:
- a frame (2) including a handgrip portion (21);
- a shaking unit (3), including a hook-shaped portion (31) for grasping a branch of a bilberry plant (93), wherein the shaking unit (3) is movable relative to the frame (2) with reciprocating motion along an axis of vibration (A) to shake the branch;
- a motor (4) associated with the frame (2);
- a transmission unit (5), interconnected between the motor (4) and the shaking unit (3), wherein the motor (4) is associated with the transmission unit (5) to vibrate the shaking unit (3) along the axis of vibration (A) at a variable vibrating frequency;
- a start and stop system (6) drivable by an operator (91) to switch the motor (4) on and off;
- a frequency adjustment system (7) drivable by the operator (91) to select the vibration frequency at least between a first frequency and a second frequency,
wherein the frequency adjustment system (7) is configured to keep the vibration frequency permanently set at the setting selected by the operator (91) unless the frequency adjustment system (7) is acted upon by the operator (91),
**characterised in that** the frequency adjustment system (7) is configured to keep the vibration frequency permanently set at the setting selected by the operator (91), independently on the operator (91) acting on the start and stop system (6), for switching the motor (4) off and, subsequently, for switching the motor (4) on.

2. The device (1) according to claim 1, wherein the frequency adjustment system (7) is drivable by the operator (91) independently of the start and stop system (6).

3. The device (1) according to claim 2, wherein the frequency adjustment system (7) is configured to store the vibration frequency even after the motor is switched off through the start and stop system (6).

4. The device (1) according to any of the previous claims, comprising a braking system connected to the start and stop system (6) and configured to dampen the vibration of the shaking unit (3) responsive to the motor being switched off through the start and stop system (6).

5. The device (1) according to any one of the preceding claims, wherein the motor (4) is an electric motor and wherein the frequency adjustment system (7) includes an electronic adjuster configured to power the electric motor (4) with a variable frequency electric current in order to vary the vibration frequency of the shaking unit (3) at least between the first frequency and the second frequency.

6. The device (1) according to claim 5, wherein the electronic adjuster is configured to reduce the frequency of the electric current, to brake the motor (4), responsive to the motor being switched off through the start and stop system (6).

7. The device (1) according to claim 5 or claim 6, wherein the electronic adjuster is configured to vary the frequency of the electric current steplessly between a plurality of frequency values.

8. The device (1) according to any one of the preceding claims, wherein the adjustment system (7) is configured to select the vibration frequency in a frequency interval between 1200 and 2200 oscillations per minute.

9. The device (1) according to any one of the preceding claims, wherein the shaking unit (3) has a stroke along the vibration axis (A) of less than 20 mm.

10. The device (1) according to any one of the preceding claims, wherein the transmission unit (5) includes a slider crank mechanism (50).

11. A method for harvesting small fruits, comprising the following steps:
- positioning a hook-shaped portion (31) of a shaking unit (3) around a branch of a small fruits plant (93);
- selecting by an operator (91) a vibration frequency of the shaking unit (3) at least between a first frequency and a second frequency using a frequency adjustment system (7);
- starting a motor (4) to start vibrating the shaking unit (3) along a vibration axis (A) at the vibration frequency, wherein the step of starting the motor (4) comprises a step of the operator (91) driving the motor (4) start and stop system (6);
- stopping the motor (4), wherein the step of stopping the motor (4) comprises a step of the operator (91) driving the motor (4) start and stop system,
**characterized in that** the vibration frequency selected by the operator (91) is kept permanently at the selected setting through a frequency adjustment system (7) unless the frequency adjustment system (7) is acted upon by the operator (91).

12. The method according to claim 11, wherein the step of selecting the vibration frequency is independent of the operation of the motor (4) start and stop system (6) and wherein the vibration frequency selected by the operator (91) remains set during the steps of starting and stopping the motor.

13. The method according to claim 11 or 12, comprising a step of controlled braking of the shaking unit (3) to dampen the vibration of the shaking unit (3) responsive to the motor (4) being stopped.

14. The method according to any one of claims 11 to 13, wherein in the step of selecting, the vibration frequency of the shaking unit (3) is selected in a frequency interval between 1200 and 2200 oscillations per minute.

15. The method according to any one of claims 11 to 14, wherein the small fruits are bilberries.

## Patentansprüche

1. Vorrichtung (1) zum Ernten von Blaubeeren, umfassend:
- einen Rahmen (2), einschließend einen Handgriffabschnitt (21);
- eine Rütteleinheit (3), einschließend einen hakenförmigen Abschnitt (31) zum Greifen eines Zweigs einer Blaubeerenpflanze (93), wobei die Rütteleinheit (3) relativ zum Rahmen (2) mit einer Pendelbewegung entlang einer Vibrationsachse (A) bewegbar ist, um den Zweig zu rütteln;
- einen Motor (4), der mit dem Rahmen (2) assoziiert ist;
- eine Getriebeeinheit (5), die zwischen dem Motor (4) und der Rütteleinheit (3) verbunden ist, wobei der Motor (4) mit der Getriebeeinheit (5) assoziiert ist, um die Rütteleinheit (3) entlang der Vibrationsachse (A) bei einer variablen Vibrationsfrequenz zu vibrieren;
- ein Start-und-Stopp-System (6), das von einem Bediener (91) bedienbar ist, um den Motor (4) ein- und auszuschalten;
- ein Frequenzregelungssystem (7), das von einem Bediener (91) bedienbar ist, um die Vibrationsfrequenz zumindest zwischen einer ersten Frequenz und einer zweiten Frequenz auszuwählen,
wobei das Frequenzregelungssystem (7) ausgelegt ist, um die Vibrationsfrequenz permanent auf der vom Bediener ausgewählten (91) Einstellung zu halten, es sei denn, der Bediener (91) wirkt auf das Frequenzregelungssystem (7) ein,
**dadurch gekennzeichnet, dass** das Frequenzregelungssystem (7) ausgelegt ist, um die Vibrationsfrequenz permanent auf der vom Bediener (91) ausgewählten Einstellung zu halten, unabhängig davon, ob der Bediener (91) auf das Start-und-Stopp-System (6) einwirkt, um den Motor (4) auszuschalten und danach den Motor (4) einzuschalten.

2. Vorrichtung (1) nach Anspruch 1, wobei das Frequenzregelungssystem (7) vom Bediener (91) unabhängig vom Start-und-Stopp-System (6) bedienbar ist.

3. Vorrichtung (1) nach Anspruch 2, wobei das Frequenzregelungssystem (7) ausgelegt ist, um die Vibrationsfrequenz auch zu speichern, nachdem der Motor durch das Start-und-Stopp-System (6) ausgeschaltet wurde.

4. Vorrichtung (1) nach einem der vorhergehenden Ansprüche, umfassend ein Bremssystem, das mit dem Start-und-Stopp-System (6) verbunden und ausgelegt ist, um die Vibration der Rütteleinheit (3) als Reaktion darauf, dass der Motor durch das Start-und-Stopp-System (6) ausgeschaltet wird, zu dämpfen.

5. Vorrichtung (1) nach einem der vorhergehenden Ansprüche, wobei der Motor (4) ein Elektromotor ist und wobei das Frequenzregelungssystem (7) einen elektronischen Regler einschließt, der ausgelegt ist, um den Elektromotor (4) mit einem frequenzgeregelten elektrischen Strom zu speisen, um die Vibrationsfrequenz der Rütteleinheit (3) zumindest zwischen der ersten Frequenz und der zweiten Frequenz zu regeln.

6. Vorrichtung (1) nach Anspruch 5, wobei der elektronische Regler ausgelegt ist, um die Frequenz des elektrischen Stroms zu reduzieren, den Motor (4) zu bremsen als Reaktion darauf, dass der Motor durch das Start-und-Stopp-System (6) ausgeschaltet wird.

7. Vorrichtung (1) nach Anspruch 5 oder Anspruch 6, wobei der elektronische Regler ausgelegt ist, um die Frequenz des elektrischen Stroms stufenlos zwischen einer Vielzahl von Frequenzwerten zu regeln.

8. Vorrichtung (1) nach einem der vorhergehenden Ansprüche, wobei das Regelungssystem (7) ausgelegt ist, um die Vibrationsfrequenz in einem Frequenzintervall zwischen 1200 und 2200 Schwingungen pro Minute auszuwählen.

9. Vorrichtung (1) nach einem der vorhergehenden Ansprüche, wobei die Rütteleinheit (3) einen Hub entlang der Vibrationsachse (A) von weniger als 20 mm aufweist.

10. Vorrichtung (1) nach einem der vorhergehenden Ansprüche, wobei die Getriebeeinheit (5) einen Schieberkurbelmechanismus (50) einschließt.

11. Verfahren zum Ernten von kleinen Früchten, umfassend die folgenden Schritte:
- Positionieren eines hakenförmigen Abschnitts (31) der Rütteleinheit (3) rund um einen Zweig einer Pflanze kleiner Früchte (93);
- Auswählen einer Vibrationsfrequenz der Rütteleinheit (3) durch einen Bediener (91) zumindest zwischen einer ersten Frequenz und einer zweiten Frequenz unter Nutzung eines Frequenzregelungssystems (7);
- Starten eines Motors (4), um das Vibrieren der Rütteleinheit (3) entlang einer Vibrationsachse (A) bei der Vibrationsfrequenz zu starten, wobei der Schritt zum Starten des Motors (4) einen Schritt des Bedieners (91) zum Bedienen des Start-und-Stopp-Systems (6) des Motors (4) umfasst;
- Stoppen des Motors (4), wobei der Schritt zum Stoppen des Motors (4) einen Schritt des Bedieners (91) zum Bedienen des Start-und-Stopp-Systems des Motors (4) umfasst,
**dadurch gekennzeichnet, dass** die vom Bediener (91) ausgewählte Vibrationsfrequenz permanent auf der durch ein Frequenzregelungssystem (7) ausgewählten Einstellung gehalten wird, es sei denn, der Bediener (91) wirkt auf das Frequenzregelungssystem (7) ein.

12. Verfahren nach Anspruch 11, wobei der Schritt zum Auswählen der Vibrationsfrequenz unabhängig vom Betrieb des Start-und-Stopp-Systems (6) des Motors (4) ist und wobei die vom Bediener (91) ausgewählte Vibrationsfrequenz während der Schritte zum Starten und Stoppen des Motors eingestellt bleibt.

13. Verfahren nach Anspruch 11 oder 12, umfassend einen Schritt zum gesteuerten Bremsen der Rütteleinheit (3), um die Vibration der Rütteleinheit (3) als Reaktion auf das Stoppen des Motors (4) zu dämpfen.

14. Verfahren nach einem der Ansprüche 11 bis 13, wobei die Vibrationsfrequenz der Rütteleinheit (3) im Schritt zum Auswählen in einem Frequenzintervall zwischen 1200 und 2200 Schwingungen pro Minute ausgewählt wird.

15. Verfahren nach einem der Ansprüche 11 bis 14, wobei die kleinen Früchte Blaubeeren sind.

## Revendications

1. Dispositif (1) de récolte des myrtilles, comprenant :
- un châssis (2) incluant une portion de poignée (21) ;
- une unité de secouage (3), incluant une portion en forme de crochet (31) pour saisir une branche d'un plant de myrtilles (93), dans laquelle l'unité de secouage (3) est mobile par rapport au châssis (2) avec un mouvement alternatif le long d'un axe de vibration (A) pour secouer la branche ;
- un moteur (4) associé au châssis (2) ;
- une unité de transmission (5), interconnectée entre le moteur (4) et l'unité de secouage (3), dans laquelle le moteur (4) est associé à l'unité de transmission (5) pour faire vibrer l'unité de secouage (3) le long de l'axe de vibration (A) à une fréquence de vibration variable ;
- un système de démarrage et d'arrêt (6) actionnable par un opérateur (91) pour mettre le moteur (4) sous tension et hors tension ;
- un système de réglage de fréquence (7) actionnable par l'opérateur (91) pour sélectionner la fréquence de vibration au moins entre une première fréquence et une seconde fréquence,
dans lequel le système de réglage de fréquence (7) est configuré pour maintenir la fréquence de vibration réglée en permanence au réglage sélectionné par l'opérateur (91) à moins que le système de réglage de fréquence (7) ne soit actionné par l'opérateur (91),
**caractérisé en ce que** le système de réglage de fréquence (7) est configuré pour maintenir la fréquence de vibration réglée en permanence au réglage sélectionné par l'opérateur (91), indépendamment de l'opérateur (91) agissant sur le système de démarrage et d'arrêt (6), pour mettre le moteur hors tension (4) et, par la suite, pour mettre le moteur sous tension (4).

2. Dispositif (1) selon la revendication 1, dans lequel le système de réglage de fréquence (7) est actionnable par l'opérateur (91) indépendamment du système de démarrage et d'arrêt (6).

3. Dispositif (1) selon la revendication 2, dans lequel le système de réglage de fréquence (7) est configuré pour stocker la fréquence de vibration même après que le moteur est mis hors tension par l'intermédiaire du système de démarrage et d'arrêt (6).

4. Dispositif (1) selon l'une quelconque des revendications précédentes, comprenant un système de freinage connecté au système de démarrage et d'arrêt (6) et configuré pour amortir la vibration de l'unité de secouage (3) en réponse au moteur étant mis hors tension par l'intermédiaire du système de démarrage et d'arrêt (6) .

5. Dispositif (1) selon l'une quelconque des revendications précédentes, dans lequel le moteur (4) est un moteur électrique et dans lequel le système de réglage de fréquence (7) inclut un dispositif de réglage électronique configuré pour alimenter le moteur électrique (4) avec un courant électrique à fréquence variable afin de faire varier la fréquence de vibration de l'unité de secouage (3) au moins entre la première fréquence et la seconde fréquence.

6. Dispositif (1) selon la revendication 5, dans lequel le régulateur électronique est configuré pour réduire la fréquence du courant électrique, pour freiner le moteur (4), en réponse au moteur étant mis hors tension par l'intermédiaire du système de démarrage et d'arrêt (6).

7. Dispositif (1) selon la revendication 5 ou la revendication 6, dans lequel le régulateur électronique est configuré pour faire varier la fréquence du courant électrique en continu entre une pluralité de valeurs de fréquence.

8. Dispositif (1) selon l'une quelconque des revendications précédentes, dans lequel le système de réglage (7) est configuré pour sélectionner la fréquence de vibration dans un intervalle de fréquence compris entre 1200 et 2200 oscillations par minute.

9. Dispositif (1) selon l'une quelconque des revendications précédentes, dans lequel l'unité de secouage (3) a une course le long de l'axe de vibration (A) inférieure à 20 mm.

10. Dispositif (1) selon l'une quelconque des revendications précédentes, dans lequel l'unité de transmission (5) inclut un mécanisme à manivelle coulissante (50).

11. Procédé de récolte de petits fruits, comprenant les étapes suivantes :
- positionner une portion en forme de crochet (31) d'une unité de secouage (3) autour d'une branche d'un plant à petits fruits (93) ;
- faire sélectionner par un opérateur (91) une fréquence de vibration de l'unité de secouage (3) au moins entre une première fréquence et une seconde fréquence à l'aide d'un système de réglage de fréquence (7) ;
- démarrer un moteur (4) pour commencer à faire vibrer l'unité de secouage (3) le long d'un axe de vibration (A) à la fréquence de vibration, dans lequel l'étape consistant à démarrer le moteur (4) comprend une étape de l'opérateur (91) consistant à piloter le système de démarrage et d'arrêt (6) du moteur (4) ;
- arrêter le moteur (4), dans lequel l'étape consistant à arrêter le moteur (4) comprend une étape de l'opérateur (91) consistant à piloter le système de démarrage et d'arrêt du moteur (4),
**caractérisé en ce que** la fréquence de vibration sélectionnée par l'opérateur (91) est maintenue en permanence au réglage sélectionné par l'intermédiaire d'un système de réglage de fréquence (7) à moins que le système de réglage de fréquence (7) ne soit actionné par l'opérateur (91).

12. Procédé selon la revendication 11, dans lequel l'étape consistant à sélectionner la fréquence de vibration est indépendante du fonctionnement du système de démarrage et d'arrêt (6) du moteur (4) et dans lequel la fréquence de vibration sélectionnée par l'opérateur (91) reste réglée pendant les étapes consistant à démarrer et à arrêter le moteur.

13. Procédé selon la revendication 11 ou 12, comprenant une étape consistant à freiner de manière contrôlée l'unité de secouage (3) pour amortir la vibration de l'unité de secouage (3) en réponse au moteur (4) étant arrêté.

14. Procédé selon l'une quelconque des revendications 11 à 13, dans lequel dans l'étape consistant à sélectionner, la fréquence de vibration de l'unité de secouage (3) est sélectionnée dans un intervalle de fréquence entre 1200 et 2200 oscillations par minute.

15. Procédé selon l'une quelconque des revendications 11 à 14, dans lequel les petits fruits sont des myrtilles.
